Europäisches Patentamt

**European Patent Office**

**Office européen des brevets**

(19)

(11) Veröffentlichungsnummer: **0 146 769**
**B1**

(12)

# EUROPÄISCHE PATENTSCHRIFT

(45) Veröffentlichungstag der Patentschrift:
**17.02.88**

(51) Int. Cl.⁴: **B 60 T 13/66**

(21) Anmeldenummer: **84113867.0**

(22) Anmeldetag: **16.11.84**

(54) **Wagenzugbremsanlage.**

(30) Priorität: **24.12.83 DE 3346919**

(43) Veröffentlichungstag der Anmeldung:
**03.07.85 Patentblatt 85/27**

(45) Bekanntmachung des Hinweises auf die Patenterteilung:
**17.02.88 Patentblatt 88/7**

(84) Benannte Vertragsstaaten:
**DE FR GB IT SE**

(56) Entgegenhaltungen:
**DE - A - 3 148 216**
**DE - A - 3 207 793**
**DE - B - 2 420 665**

(73) Patentinhaber: **ROBERT BOSCH GMBH, Postfach 50,**
**D-7000 Stuttgart 1 (DE)**

(72) Erfinder: **Grauel, Ingolf, Dipl.-Ing., Lessingstrasse 6,**
**D-7143 Valhingen/Enz (DE)**
Erfinder: **Stumpe, Werner, Goerdelerstrasse 10,**
**D-7014 Kornwestheim (DE)**

ACTORUM AG

# Beschreibung

Die Erfindung geht aus von einer Wagenzugbremsanlage nach der Gattung des Hauptanspruchs. Eine derartige Bremsanlage ist bekannt (DE-B-2420 665).

Bei einer derartigen bekannten, modernen Bremsanlage besteht das Problem, dass sie kombinierbar sein muss mit dem üblichen Standard pneumatischer Bremsanlagen. Wenn also Einzel-Fahrzeuge (Zugwagen oder Anhänger bzw. Auflieger) mit dazu passenden, anderen Einzel-Fahrzeugen gekuppelt werden sollen, von denen nur eines eine moderne Bremsanlage mit zusätzlicher elektrischer Ansteuerung aufweist, so müssen die Bremsanlagen solcher Wagenzüge in beliebiger Kombination betrieben werden können.

Der Erfindung liegt also die Aufgabe zugrunde, eine Wagenzugbremsanlage der eingangs genannten Art so auszubilden, dass an ein elektropneumatisch bremsbares Zugfahrzeug sowohl ein Standart-Zweileitungsbrems-Anhänger als auch ein elektropneumatisch bremsbarer Anhänger ankuppelbar ist, wobei die Anhängerbremse vom Zugwagen aus betätigbar ist. Umgekehrt soll es aber auch möglich sein, einen elektropneumatisch bremsbaren Anhänger mit einem Standart-Zweileitungsbremsen-Zugfahrzeug zu betreiben.

Diese Aufgabe wird gemäss der Erfindung bei einer gattungsgemässen Wagenzugbremsanlage durch die kennzeichnenden Merkmale des Patentanspruchs gelöst.

Eine solche Wagenzugbremsanlage hat den Vorteil, dass Wagenzüge in beliebiger Kombination zusammengestellt werden können, gleichgültig, ob ihre Einzel-Fahrzeuge mit einer Standart-Zweileitungsbremse oder mit einer elektropneumatischen Bremse ausgerüstet sind.

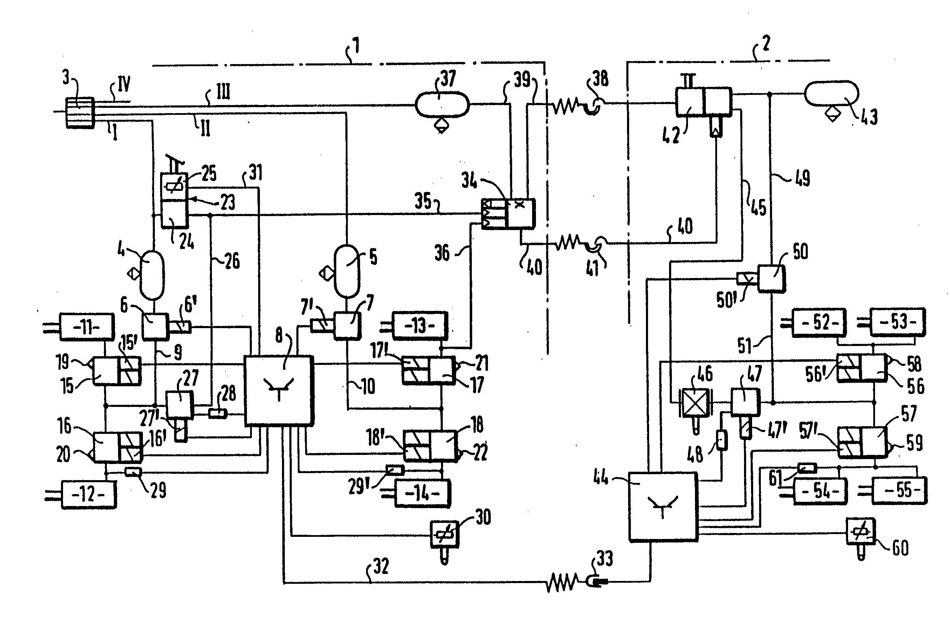

Ein Ausführungsbeispiel der Erfindung ist in der Zeichnung dargestellt und in der nachfolgenden Beschreibung näher erläutert.

## Beschreibung des Ausführungsbeispiels

Ein Wagenzug besteht aus einer Sattelzugmaschine 1 und einem Sattelanhänger 2. Jedes Wagenzug-Teil 1 bzw. 2 hat seine eigene Bremsanlage. Die Bremsanlage der Sattelzugmaschine hat einen nicht dargestellten Kompressor, an den ein Vierkreis-Schutzventil 3 angeschlossen ist. Von diesem Schutzventil 3 aus werden vier Bremskreise I, II, III, IV versorgt. Die Bremskreise I und II sind Betriebsbremskreise, sie dienen zum Versorgen der Sattelzugmaschinen-Bremsen. Bremskreis III ist ein Anhänger-Versorgungskreis und Bremskreis IV versorgt angeschlossene, nicht näher dargestellte Verbraucher.

In den zwei Betriebsbremskreisen I und II liegen je ein Vorratsbehälter 4 bzw. 5, denen je ein 2/2-Wege-Magnetventil 6 bzw. 7 nachgeschaltet ist. Je ein Magnet 6' bzw. 7' dieses Magnetventils 6 bzw. 7 ist an eine elektronische Schalteinrichtung 8 angeschlossen. Von den Magnetventilen 6 und 7 geht je eine Bremsleitung 9 bzw. 10 zu zwei Vorderachs-Bremszylindern 11 und 12 und zu zwei Hinterachs-Bremszylindern 13 und 14. Nahe bei den Bremszylindern 11, 12, 13, 14 ist in die Bremsleitung 9 bzw. 10 je ein Überwachungsventil 15, 16 bzw. 17, 18 eingesetzt, die von je einem Magneten 15', 16' bzw. 17', 18' betätigt werden. Die Überwachungsventile 15, 16, 17, 18 stehen stromlos auf Durchlass und sie sperren bei Aktivierung den Zustrom ab und entlasten die Bremszylinder 11, 12 bzw. 13, 14 über je einen Entlüftungsanschluss 19, 20 bzw. 21, 22. Die Magnete 15', 16', 17', 18' sind ebenfalls an die elektronische Schalteinrichtung 8 angeschlossen.

Ein Bremssignalgeber 23 hat einen pneumatischen Teil 24 und einen elektrischen Teil 25. Der pneumatische Teil 24 ist an den Bremskreis I angeschlossen und kann über eine Leitung 26 ein pneumatisches Signal aussteuern, das zu einem Sperrventil 27 gelangt. Das Sperrventil 27 hat einen Magneten 27', der in Ruhestellung das Sperrventil 27 auf Durchlass hält und der, wie die anderen Magnete auch, Verbindung mit der Schalteinrichtung 8 hat. Das Vorhandensein eines pneumatischen Signals wird mit einem Sensor 28 überwacht. Ein gleichartiger Sensor 29, 29' sitzt auch vor dem Vorder- und dem Hinterachs-Bremszylinder 12, 14.

Die elektronische Schalteinrichtung 8 hat zusätzlich noch Verbindung mit einem elektrischen, lastabhängigen Bremskraftregler 30, ferner mit den Drucksensoren 28, 29, 29' und mit einer elektrischen Steuerleitung 32, die zu einer elektrischen Anhänger-Leitungskupplung 33 führt und über eine Signalleitung 31 mit dem elektrischen Teil 25 des Bremssignalgebers 23.

Am Ende der Sattelzugmaschine 1 ist ein Anhängersteuerventil 34 angeordnet, das über eine Leitung 35 vom Bremskreis I, über eine Leitung 36 vom Bremskreis II und ausserdem von einem nicht dargestellten Federspeicher-Bremskreis ansteuerbar ist. Das Anhängersteuerventil überwacht eine Anhängervorratsleitung 39, die vom Vorratskreis III über einen Behälter 37 zu einer Anhänger-Vorratsleitungskupplung 38 geführt ist, und es überwacht ausserdem eine Anhänger-Bremsleitung 40, die zu einer Anhänger-Bremsleitungskupplung 41 führt.

Auf dem Sattelanhänger 2 befindet sich ein Anhänger-Bremsventil 42, ein Anhänger-Vorratsbehälter 43 sowie ebenfalls eine elektronische Schalteinrichtung 44.

Vom Anhänger-Bremsventil 42 führt eine Bremsleitung 45 über einen lastabhängigen Bremskraftregler 46 zu einem Sperrventil 47 mit einem Magneten 47', der an die Schalteinrichtung 44 angeschlossen ist. Auch hier überwacht ein Sensor 48, ob ein Drucksignal ansteht.

Eine Vorratsleitung 49 führt zu einem 2/2-Wege-Magnetventil 50, das von einem an die Schalteinrichtung 44 angeschlossenen Magneten 50' betätigbar ist. Von dem Magnetventil 50 führt eine Bremsleitung 51 zu vier Bremszylindern 52, 53, 54, 55 der Sattelanhänger-Räder, wobei die Bremszylinder 52, 53, 54, 55 paarweise angeschlossen sind. Jedes Paar 52/53 bzw. 54/55 wird von einem

Überwachungsventil 56 bzw. 57 überwacht, die von je einem Magneten 56' bzw. 57' betätigt werden. Die Überwachungsventile 56, 57 stehen stromlos auf Durchgang und sperren bei Aktivierung ihrer Magnete 56', 57' den Zustrom ab und entlasten die Bremszylinder 52, 53, 54, 55 über je einen Entlüftungsanschluss 58 bzw. 59. Auch auf dem Sattelanhänger 2 befindet sich noch ein elektrischer, lastabhängiger Bremskraftregler 60, und an dem Bremszylinder-Paar 54/55 ist noch ein Sensor 61 angeordnet.

## Wirkungsweise

Aus dem Aufbau der Bremsanlagen von Sattelzugmaschine 1 und Sattelanhänger 2 ist zu erkennen, dass es sich um eine Zweikreis-Zweileitungsbremse handelt, bei der zwischen den beiden Fahrzeugteilen ausser der üblichen Steuerleitung und der Vorratsleitung noch eine zweite Steuerleitung in Form der elektrischen Steuerleitung 32 vorgesehen ist.

Diese zweite Steuerleitung 32 nimmt ihren Ausgang von der elektronischen Schalteinrichtung 8, die ihr Steuersignal von dem elektrischen Teil 25 des Bremswertgebers 23 bezieht. Bei der Betätigung des Bremswertgebers 23, die in den beiden Teilen 24 und 25 gleichzeitig stattfindet, ist das elektrische Bremssignal schneller als das pneumatische, so dass das pneumatische Drucksignal am Sperrventil 27 zurückgehalten wird. Auf diese Weise wird gewöhnlich an den Vorder- und Hinterrädern der Sattelzugmaschine 1 mit den Magnetventilen 6 und 7 elektrisch gebremst. Nur wenn die Elektrik ausfällt, öffnet das Sperrventil 27 – es ist ja stromlos offen – und lässt Druckluft aus der Leitung 26 in die Bremszylinder 11 und 12 der Vorderachse gelangen; hinten wird dann nicht gebremst; für den Notfall ist das ausreichend.

Auf dem Sattelanhänger wird über das umschaltbare Magnetventil 50 vorzugsweise mit elektrischer Ansteuerung, aber über das stromlos offene Sperrventil 47 auch pneumatisch gebremst, wenn die Elektrik ausfällt.

Wird an die Sattelzugmaschine 1 ein Sattelanhänger 2 angekuppelt, dessen Bremsanlage in herkömmlicher Weise nur rein pneumatisch ausgelegt ist, so wird die elektrische Steuerleitung 32 nicht gekuppelt und der Sattelanhänger über sein Anhänger-Bremsventil nur pneumatisch gebremst.

Umgekehrt kann auch eine Sattelzugmaschine, die eine Bremsanlage ohne Elektrik hat, mit einem Sattelanhänger 2 gekuppelt werden, der mit einer zusätzlichen elektrischen Bremse ausgerüstet ist.

Auch ist die Erfindung nicht auf einen aus Sattelzugmaschine und Sattelanhänger bestehenden Wagenzug begrenzt. Sie ist vielmehr auch anwendbar bei Lastkraftwagenzügen aus Lastkraftwagen und Lastanhängern, auf Zugmaschinenzügen aus Strassenzugmaschinen und Lastanhängern und auf Kraftomnibuszügen aus Kraftomnibussen und Omnibus-Anhängern.

## Patentanspruch

Wagenzugbremsanlage, bei der auf dem Zugwagen und/oder auf dem Anhänger bzw. Sattelauflieger neben einer Zweileitungs-Bremseinrichtung noch eine elektrisch angesteuerte Bremseinrichtung vorgesehen ist und bei der die beiden Bremseinrichtungen (pneumatisch und elektrisch) über jeweils eigene Leitungsanschlüsse (Kupplungsköpfe 38, 41 bzw. 33) mit dem Anhänger verbindbar sind, dadurch gekennzeichnet, dass auf dem Zugwagen (Sattelzugmaschine 1) eine sowohl pneumatisch als auch elektrisch mit höherer Priorität ansteuerbare Betriebsbremseinrichtung vorgesehen ist und dass der Zugwagen mit einem Anhänger (Sattelauflieger 2) mit rein pneumatischer, vom Zugwagen aus betätigbarer 2-Leitungs-Anhänger-Bremseinrichtung wie auch bei Bedarf mit einem Anhänger kuppelbar ist, auf dem eine ebenfalls vom Zugwagen aus sowohl pneumatisch als auch elektrisch oder nur elektrisch ansteuerbare Bremseinrichtung vorgesehen ist und der im Notfall (Leitungsriss), wie bei rein pneumatischen Bremseinrichtungen üblich, automatisch über den pneumatischen Leitungsanschluss (Kupplungskopf 38) durch Druckabfall im Bremssinn ansteuerbar ist.

## Claim

Brake installation for trailer trains, in which there is provided on the tractor and/or on the trailer or semitrailer not only a two-line brake system but also an electrically activated brake system and in which the two brake systems (pneumatic and electric) can be connected in each case via their own line connections (coupling heads 38, 41 and 33, respectively) to the trailer, characterized in that on the tractor (semitrailer tractor 1) there is provided a service brake system which can be activated both pneumatically and electrically with higher priority and in that the tractor can be coupled to a trailer (semitrailer 2) by purely pneumatic 2-line trailer brake system which can be operated from the tractor and also, if need be, can be coupled to a trailer on which there is provided a brake system which can be activated likewise from the tractor both pneumatically and electrically or only electrically and which, in an emergency (line breakage), can be automatically activated, as is usual in the case of purely pneumatic brake systems, via the pneumatic line connection (coupling head 38) by a pressure drop in the braking sense.

## Revendication

Installation de freinage pour train routier, dans laquelle un dispositif de freinage commandé électriquement est encore prévu, à côté d'un dispositif de freinage à deux tuyauteries, sur le véhicule de traction et/ou sur la remorque et dans laquelle les deux dispositifs de freinage (Pneumatique et électrique) sont chacun susceptibles d'être reliés à la remorque au moyen de raccordement de tuyauteries propres (Têtes d'accouplement 38, 41 respectivement 43); caractérisé en ce qu'un dispositif de freinage de fonctionnement, susceptible d'être commandé aussi bien pneumatiquement qu'également électriquement avec une priorité plus élevée, est prévu et en ce que le tracteur peut être accoouplé à une remorque (Semi-remorque 2) ayant un dispositif simple pneumatique de freinage de remorque à deux tuyauteries, commandable depuis le tracteur, qu'également accouplable en cas de besoin à une remorque sur laquelle est prévu un dispositif de freinage commandable également depuis le tracteur, aussi bien pneumatiquement qu'également électriquement, et qui est commandable, en cas d'urgence (Fissure de tuyauterie), dans le sens d'un freinage par manque de pression, automatiquement par le raccordement de tuyauterie pneumatique (Tête d'accouplement 38), ainsi qu'il est courant pour les dispositifs purement pneumatiques.